# EUROPEAN PATENT APPLICATION

(11) **EP 3 819 800 A1**
(43) Date of publication of application: **12.05.2021**
(21) Application number: 20204426.9
(22) Date of filing: 28.10.2020
(51) Int. Cl.: G06F 21/57, G06F 21/64, H04L 9/32

(54) **INFORMATION PROCESSING APPARATUS, METHOD FOR ENSURING FILES AND STORAGE MEDIUM**

(30) Priority: 07.11.2019 JP 2019202472
(71) Applicant: Ricoh Company, Ltd., Tokyo 143-8555 (JP)
(72) Inventor: Sakurada, Daiki, Ohta-ku, Tokyo 143-8555 (JP)
(74) Representative: White, Duncan Rohan

(57) **Abstract**

An information processing apparatus includes: first means for performing signature verification based on a value and a signature file to ensure integrity and authenticity of an update file to be used when a system is updated, the value being uniquely calculated based on the update file, and the signature file corresponding to the update file; and second means for ensuring the integrity and authenticity of an invocation file to be executed at startup of the system. After the first means causes the system to be updated using the update file for which the integrity and authenticity are ensured, the second means causes the system to be launched using the invocation file for which the integrity and authenticity are ensured, to ensure the integrity and authenticity of files that are used when the system is updated and at startup of the system.

## Description

### BACKGROUND OF THE INVENTION

### 1. Field of the Invention

The present disclosure relates to an information processing apparatus, a method for ensuring files, and a storage medium.

### Optoelectronic module.

### 2. Description of the Related Art

For information processing devices, in order to ensure integrity and authenticity of files, techniques (e.g., Trusted boot, Linux-IMA (Integrity Measurement Architecture), and the like) have been known in which tampering of files (firmware and software) included in a system is detected and only legitimate files can be executed when the system is launched.

In order to check the integrity of files to be executed when the system is launched, Japanese Unexamined Patent Application Publication No. 2019-3275, which is hereinafter referred to as Patent document 1, discloses comparing, for each file, data corresponding to a file identifier with truth data, and interrupting the invocation of the system when the data does not match the truth data.

An object of the present disclosure is to ensure integrity and authenticity of a file that is updated when a system is updated.

### SUMMARY

An information processing apparatus according to one aspect of the present disclosure includes first means for performing signature verification based on a value and a signature file to ensure integrity and authenticity of an update file to be used when a system is updated, the value being uniquely calculated based on the update file, the signature file corresponding to the update file; and second means for ensuring the integrity and authenticity of an invocation file to be executed at startup of the system. After the first means cause the system to be updated using the update file for which the integrity and authenticity are ensured, the second means causes the system to be launched using the invocation file for which the integrity and authenticity are ensured, to ensure the integrity and authenticity of the files that are used when the system is updated and at startup of the system.

Integrity and authenticity of a file that is updated when a system is updated can be ensured.

### BRIEF DESCRIPTION OF THE DRAWINGS

Fig. 1 is a diagram illustrating an example of a hardware configuration of an information processing apparatus according to an embodiment;
Fig. 2 is a diagram illustrating an example of a software configuration of the information processing apparatus used when a system is updated;
Fig. 3 is a diagram illustrating an example of an operation state of the information processing apparatus;
Fig. 4 is a diagram for explaining processing of checking integrity and authenticity of a file when the system is updated;
Fig. 5 is a diagram illustrating an example of activity of a signature generation application;
Fig. 6 is a diagram illustrating an example of activity of a system update application;
Fig. 7 is a diagram illustrating an example of activity of a signature verification application;
Fig. 8 is a diagram illustrating an example of the software configuration of the information processing apparatus used when installation is forcibly performed;
Fig. 9 is a diagram for explaining processing of checking integrity and authenticity of a file to be used when installation is forcibly performed;
Fig. 10 is a diagram illustrating an example of activity of the signature generation application used when installation is forcibly performed;
Fig. 11 is a diagram illustrating an example of activity of the system update application used when installation is forcibly performed;
Fig. 12 is a diagram illustrating an example of activity of the signature verification application used when installation is forcibly performed;
Fig. 13 is a diagram illustrating an example of a hardware configuration of a PC (server); and
Fig. 14 is a diagram illustrating an example of a hardware configuration of an MFP.

### DETAILED DESCRIPTION OF THE EMBODIMENTS

One or more embodiments will be hereinafter described with reference to the drawings. In each figure, the same components denote the same reference numerals as far as possible; accordingly, duplicate explanation for the components will be omitted.

### <Hardware configuration>

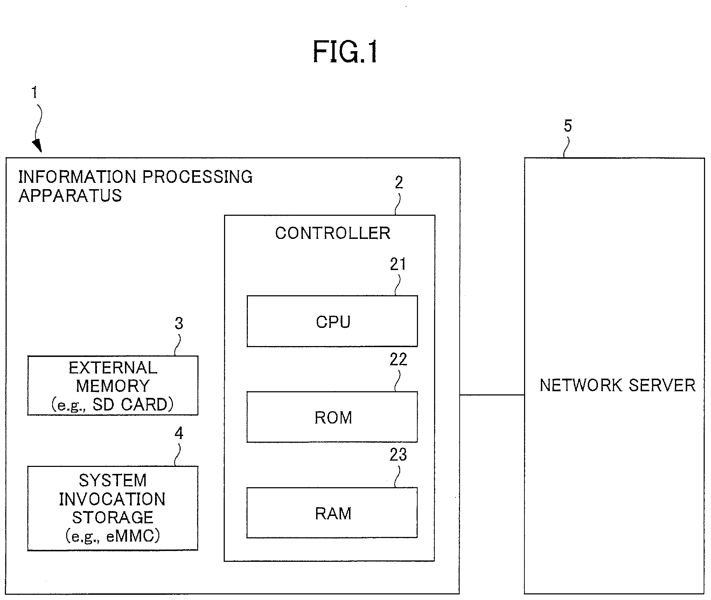

Fig. 1 is a diagram illustrating an example of a hardware configuration of an information processing apparatus 1 according to the embodiment. As illustrated in Fig. 1, the information processing apparatus 1 includes a controller 2, an external memory 3, and a system invocation storage 4. The information processing apparatus 1 is connected to a network server 5 via a network such as the Internet.

The controller 2 controls the entire operation of the information processing apparatus 1. In the present embodiment, in particular, the controller 2 detects the tampering of a file (firmware, software, or the like) that is included in a system and that is to be used when the system is launched or when the system is updated. The controller 2 also enables only a legitimate file to be executed when the system is launched or when the system is updated. In such a manner, integrity and authenticity of the file is ensured.

The controller 2 includes a central processing unit (CPU) 21, a read only memory (ROM) 22, and a random access memory (RAM) 23.

The storage 4 stores one or more files (firmware and software) that constitute part of the system. An example of the storage includes an embedded multimedia card (eMMC) or the like.

The memory 3 stores one or more new system update (ROM update) files (system update information 14 and signature information 15 for a system update). The new system update files are stored at the network server 5. An example of the external memory 3 includes an SD card or the like. The above new files are to be written in the storage 4.

One or more files (system update information 14) to be used for a new system update (ROM update) are stored at the network server 5.

### <Assurance of file to be used when system is updated>

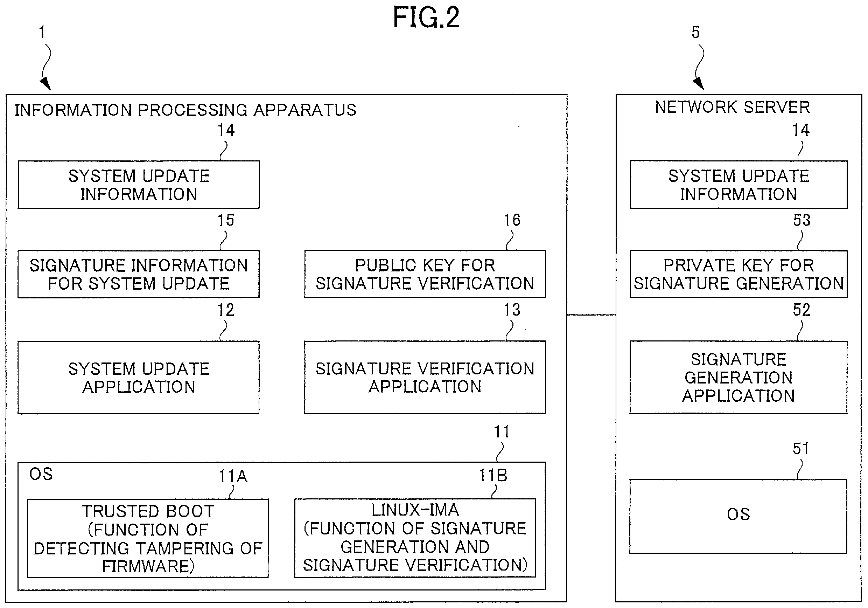

Referring to Figs. 2 through 7, functionality (first function) for ensuring the integrity and authenticity of a file (update file) to be used when the system is updated will be described hereafter.

Fig. 2 is a diagram illustrating an example of a software configuration of the information processing apparatus 1 used when a system is updated. As illustrated in Fig. 2, the information processing apparatus 1 includes an operating system (OS) 11, a system update application 12, and a signature verification application 13. The information processing apparatus 1 also stores data of each of the system update information 14, the signature information 15 for a system update, and a public key 16 for signature verification.

The OS 11 causes the entire information processing apparatus 1 to be controlled. Functionality of the OS 11 includes functions provided by Trusted Boot 11A and Linux-IMA 11B. The Trusted Boot 11A enables the tampering of firmware (e.g., BIOS or a boot loader) to be detected when the system is launched. After the system is launched by the firmware used at startup of the system, the Linux-IMA 11B enables signature generation and signature validation for a given file (check of integrity and authenticity of the file) to be performed.

The system update application 12 causes the system update information 14 stored in the external memory 3 to be stored in the system invocation storage 4.

The signature verification application 13 causes a signature verification result for the system update information 14 to be indicated. The system update information 14 is stored in the system invocation storage 4 when the system is updated.

The system update information 14 includes a given file (firmware or software) that constitutes part of the system.

The signature information 15 for a system update includes signature information corresponding to the system update information 14.

The public key 16 for signature verification includes public key information to be used when the signature verification is performed.

The network server 5 includes an operating system (OS) 51 and a signature generation application 52. The network server 5 also stores data of each of the system update information 14 and a private key 53 for signature generation.

The OS 51 causes the entire network server 5 to be controlled.

The signature generation application 52 causes signature information (signature information 15 for a system update) to be generated. The signature information is used to check the integrity and authenticity of the system update information 14, which is stored in the system invocation storage 4 when the system is updated.

The private key 53 for signature generation includes private key information to be used when the signature is generated.

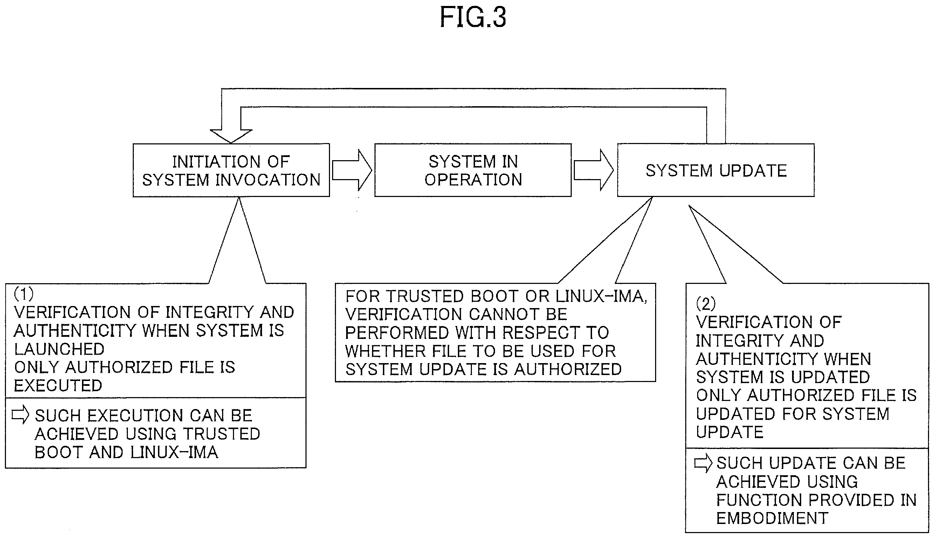

Fig. 3 is a diagram illustrating an example of an operation state of the information processing apparatus 1 according to the present embodiment. As illustrated in Fig. 3, the operation state includes initiation of system invocation, during the operation of the system, and the system update, which are transitioned in this order. After the system is updated, the system is launched again. In such a sequence of operations, integrity and authenticity of one or more files used for the system are required to be verified.

Conventionally, when the system is launched, the integrity and authenticity is checked using the Trusted Boot 11A, the Linux-IMA 11B, and the like. However, integrity and authenticity cannot be checked when the system is updated. In other words, the general function provided by the Trusted Boot 11A and the Linux-IMA 11B cannot enable the integrity and authenticity to be checked when the system is updated.

In contrast, according to the present embodiment, as a second function provided by the information processing apparatus 1, integrity and authenticity of a given file (invocation file), which is stored in the storage 4 and is to be used when the system is launched, are checked using the general function provided by the Trusted Boot 11A and the Linux-IMA 11B. Further, the integrity and authenticity of a given update file, which is stored in the external memory 3 and is to be used when the system is updated, are checked as a first function provided by the information processing apparatus 1. In such a manner, the integrity and authenticity of a series of files used for the system are ensured. Note that in the present embodiment, the signature verification application 13 of the information processing apparatus 1 enables the first function to be implemented. The Trusted Boot 11A and the Linux-IMA 11B enable the second function to be implemented.

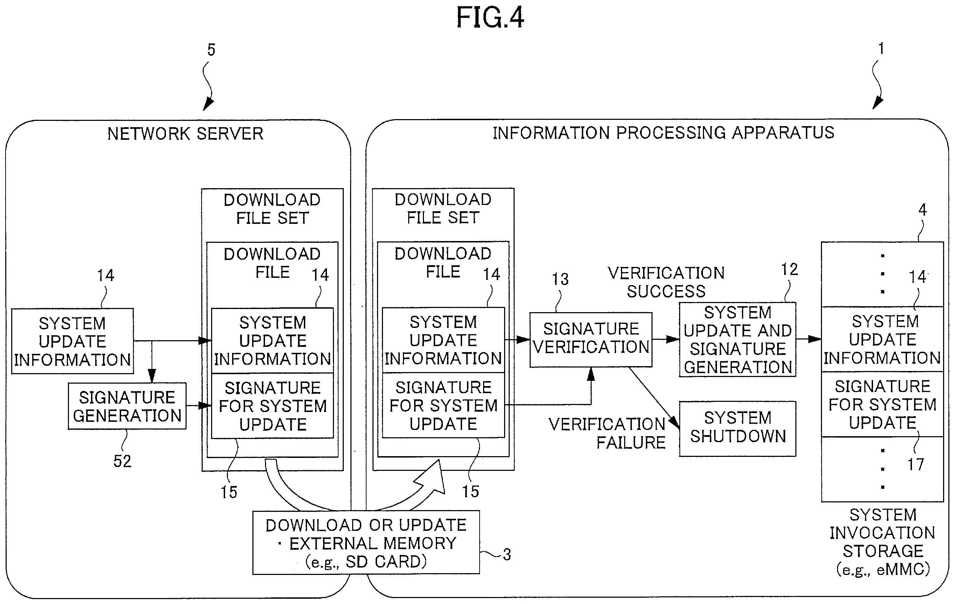

Fig. 4 is a diagram for explaining processing of checking integrity and authenticity of a given file when the system is updated.

At the network server 5, when the system is updated, first, the signature generation application 52 causes signature information (signature information 15 (signature file) for a system update), which corresponds to information (update information 14 (update file)) to be updated, to be generated based on the information (update information 14 (update file)) to be updated.

Then, the generated signature information 15 and the system update information 14 are stored in the external memory 3, and the system update application 12 of the information processing apparatus 1 causes a system update process to be executed. In the system update process, first, the signature verification application 13 causes signature verification to be performed using the system update information 14 and the signature information 15 for a system update that are stored in the external memory 3.

When the signature verification is successfully performed, the system update information 14 is stored in the system invocation storage 4 of the information processing apparatus 1, and then the system is updated. Further, when the signature verification is successfully performed, the signature information 17 for system invocation is generated and stored in a metadata area of the system update information 14. When the system is launched, the signature information 17 for system invocation is used to check the integrity and authenticity of the system update information 14, by using the function provided by the Linux-IMA 11B. When the signature verification fails, the system is stopped.

After the system is completely updated, when the system is normally launched, integrity and authenticity of firmware (e.g., BIOS or a boot loader) to be used when the system is launched are checked using the Trusted Boot 11A. Further, integrity and authenticity of a given file to be executed after the invocation by the firmware used at startup of the system are checked using the Linux-IMA 11B, as signature verification.

As described above, in the present embodiment, when integrity and authenticity of the system update information 14 to be used when the system is updated, are checked (as the first function), the system update information 14 and the signature information 15 for a system update are downloaded from the network server 5 to the information processing apparatus 1. In such a configuration, the signature information 15 for a system update is generated using the private key stored at the network server 5, which is different from the information processing apparatus 1. For this reason, the private key at the network server 5 is not identified by the information processing apparatus 1. As a result, signature files can be prevented from being fraudulently generated based on information at the information processing apparatus 1. Further, the system can be prevented from being fraudulently updated using an unauthorized signature file.

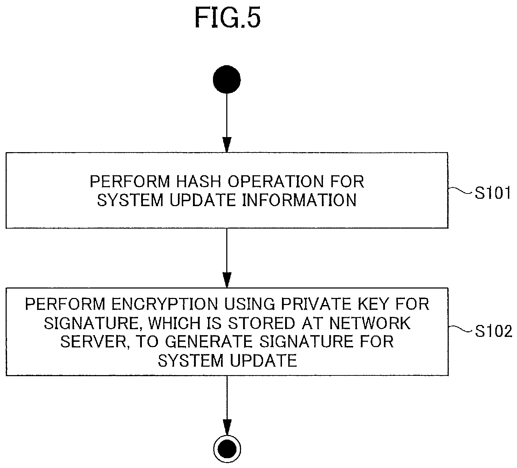

Fig. 5 is a diagram illustrating an example of activity of the signature generation application 52.

The signature generation application 52 that is executed at the network server 5 causes a hash operation for the system update information 14 to be performed (S101).

Then, a hash value calculated by the hash operation in step S101 is encrypted with the private key 53 for signature generation that is stored at the network server 5. Further, an electronic signature for a system update (signature information 15 for a system update) is generated (S102).

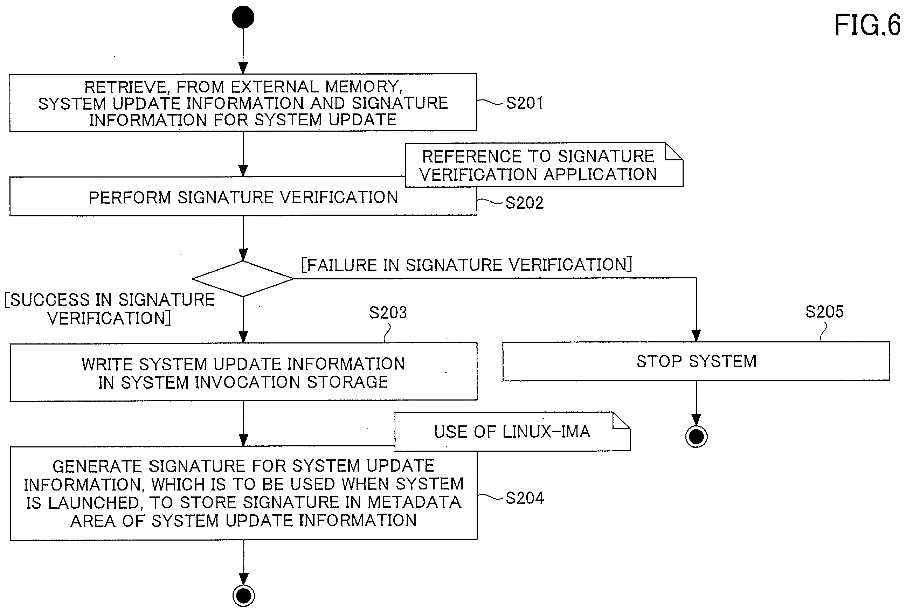

Fig. 6 is a diagram illustrating an example of activity of the system update application 12.

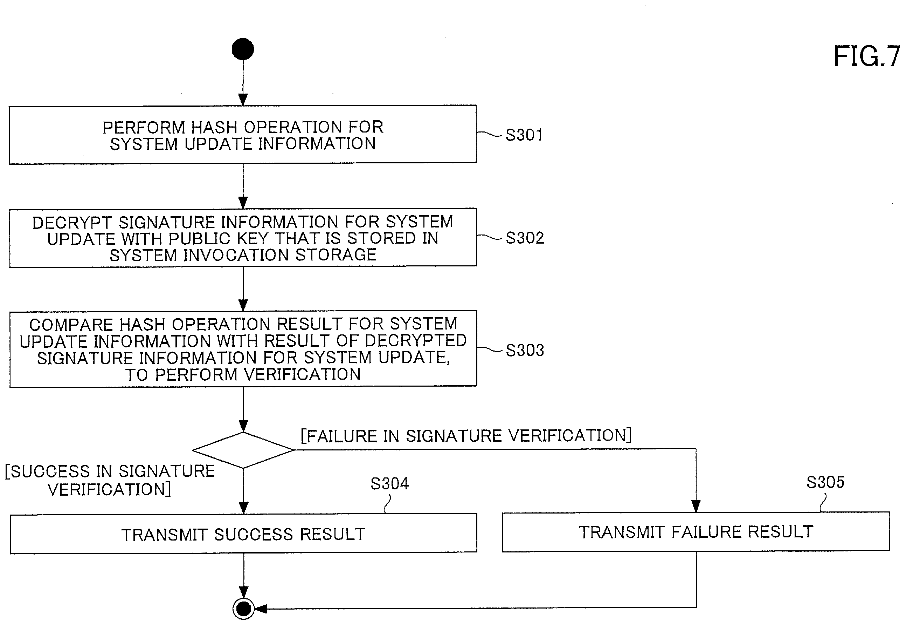

First, the system update information 14 and the signature information 15 for a system update are retrieved from the external memory 3 (S201). Then, signature verification is performed using the signature verification application 13 (S202). A signature verification process by the signature verification application 13 will be described below in detail with reference to Fig. 7.

When a signature verification result transmitted from the signature verification application 13 indicates a success, the system update information 14 is written in the system invocation storage 4 and then the system is updated (S203). Further, a signature (signature information 17 for system invocation), which is to be used when the system is normally launched and is for performing the signature verification for the system update information 14, is generated using a signature generation function provided by the Linux-IMA 11B. The generated signature is stored in a metadata area of the system update information 14 that is stored in the system invocation storage 4 (S204).

When a signature verification result transmitted from the signature verification application 13 indicates a failure, the system is stopped (S205).

Fig. 7 is a diagram illustrating an example of activity of the signature verification application 13.

The signature verification application 13 causes the hash operation for the system update information 14 to be performed (S301).

The signature information 15 for a system update is decoded with the public key 16 for signature verification that is stored in the system invocation storage 4 (S302).

A hash operation result for the system update information 14 is compared with a result of the decoded signature information 15 for a system update, to perform verification (S303).

As a compared result for the verification, when the signature verification is successfully performed, a success result is transmitted to the system update application 12 (S304). When the signature verification fails, a failure result is transmitted to the system update application 12 (S305).

### <Assurance of file to be used when installation is forcibly performed>

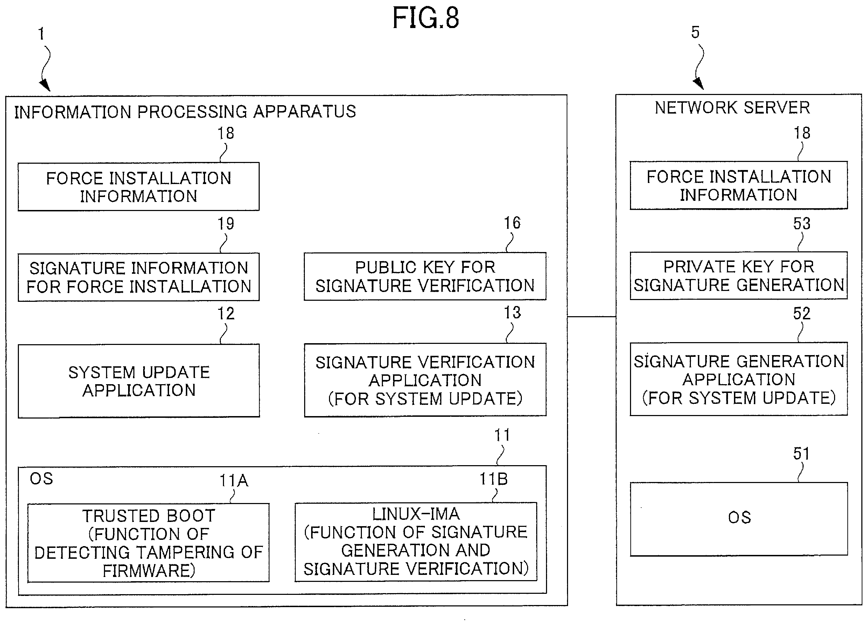

In addition to the case of updating the system described with reference to Figs. 2 through 7, in a case where installation is forcibly performed to rewrite the entire system, the information processing apparatus according to the present embodiment can also provide a function (third function) of ensuring the integrity and authenticity of a given file to be used. In such a manner, in addition to the case of invoking the system and the case of updating the system, integrity and authenticity of a given file to be used in the case of performing force install can be also ensured. Accordingly, for a series of files used by the system, integrity and authenticity can be further ensured. In the present embodiment, the third function is implemented using the signature verification application 13 of the information processing apparatus 1. The third function will be described below with reference to Figs. 8 through 12.

Fig. 8 is a diagram illustrating an example of the software configuration of the information processing apparatus 1 used when installation is forcibly performed.

When installation is forcibly performed, instead of the system update information 14 and the signature information 15 for a system update, the force installation information 18 and the signature information 19 for force installation are included in the software configuration.

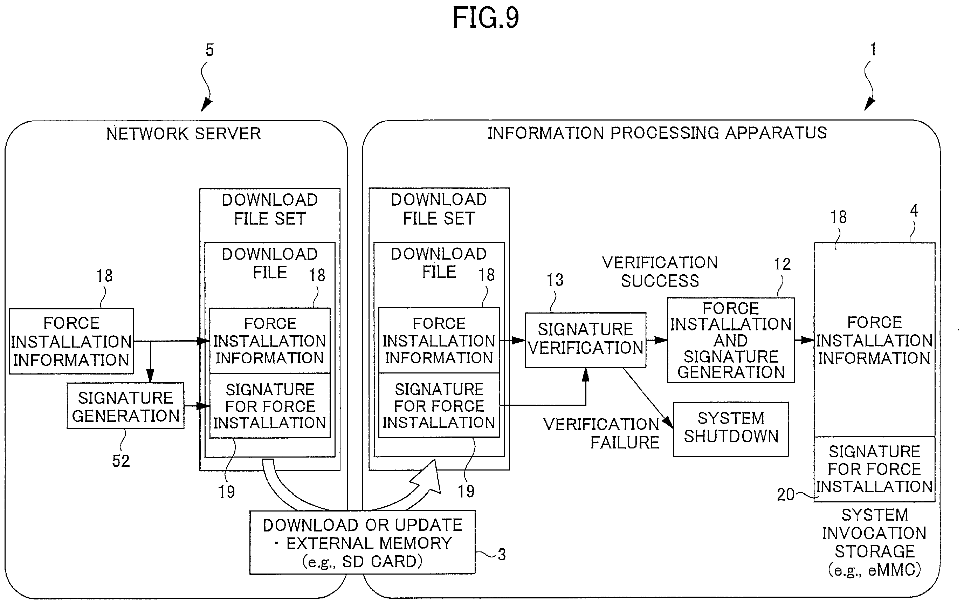

Fig. 9 is a diagram for explaining processing of checking the integrity and authenticity of a given file to be used when installation is forcibly performed. At startup of the system or in other cases, when the entire system is forcibly installed, the process proceeds as follows.

At the network server 5, when installation is forcibly performed, first, the signature generation application 52 causes signature information (signature information 19 for force installation) corresponding to the force installation information 18 to be generated based on the force installation information 18 (force installation file).

Then, the generated signature information 19 and the force installation information 18 are stored in the external memory 3, and a system update process is performed using the system update application 12 of the information processing apparatus 1. In a force installation process, the signature verification application 13 first causes the signature verification to be performed based on the force installation information 18 and the signature information 19 for force installation that are stored in the external memory 3.

When the signature verification is successfully performed, the force installation information 18 is stored in the system invocation storage 4 of the information processing apparatus 1 and then installation is forcibly performed. Further, when the signature verification is successfully performed, the signature information 20 for force installation is generated and stored in a metadata area of the force installation information 18. When the system is launched, the signature information 20 is used to check the integrity and authenticity of the force installation information 18, by using the function provided by the Linux-IMA 11B. When the signature verification fails, the system is stopped.

After the force installation is completed, in order to normally invoke the system, integrity and authenticity of firmware (e.g., BIOS or a boot loader) are checked using the Trusted Boot 11A. Further, integrity and authenticity of a given file to be executed after the invocation by the firmware used at startup of the system are checked using the Linux-IMA 11B, as signature verification.

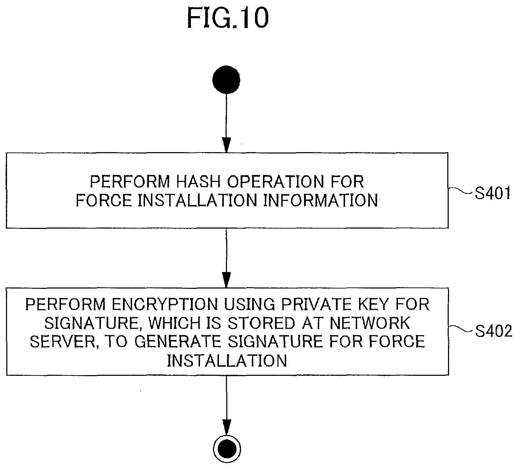

Fig. 10 is a diagram illustrating an example of activity of the signature generation application 52 used when installation is forcibly performed.

The signature generation application 52 that is executed at the network server 5 performs a hash operation for the force installation information 18 (S401).

Then, a hash value calculated by the hash operation in step S401 is encrypted with the private key 53 for signature generation that is stored at the network server 5. Further, an electronic signature for force installation (signature information 19 for force installation) is generated (S402).

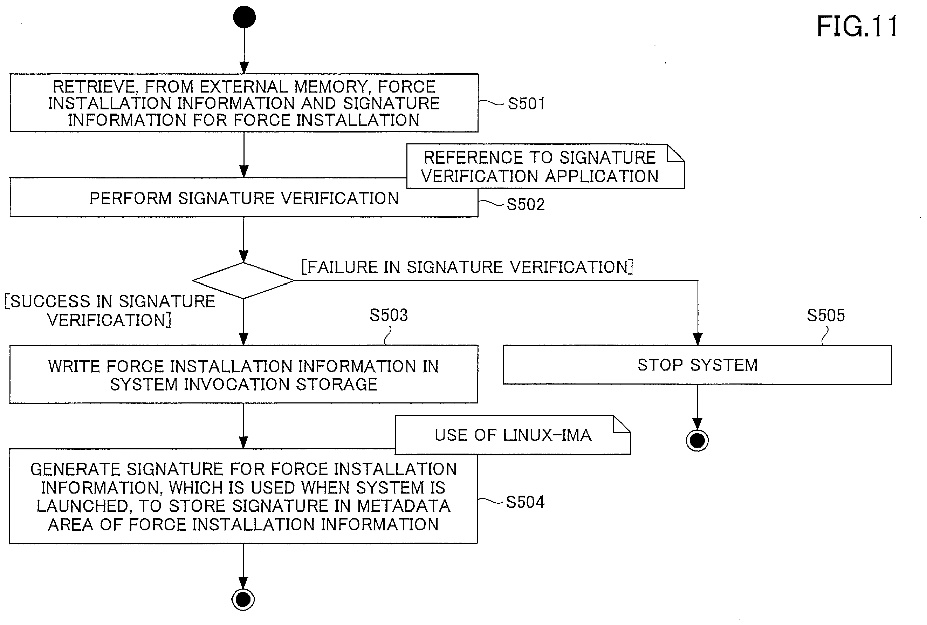

Fig. 11 is a diagram illustrating an example of activity of the system update application 12 used when installation is forcibly performed.

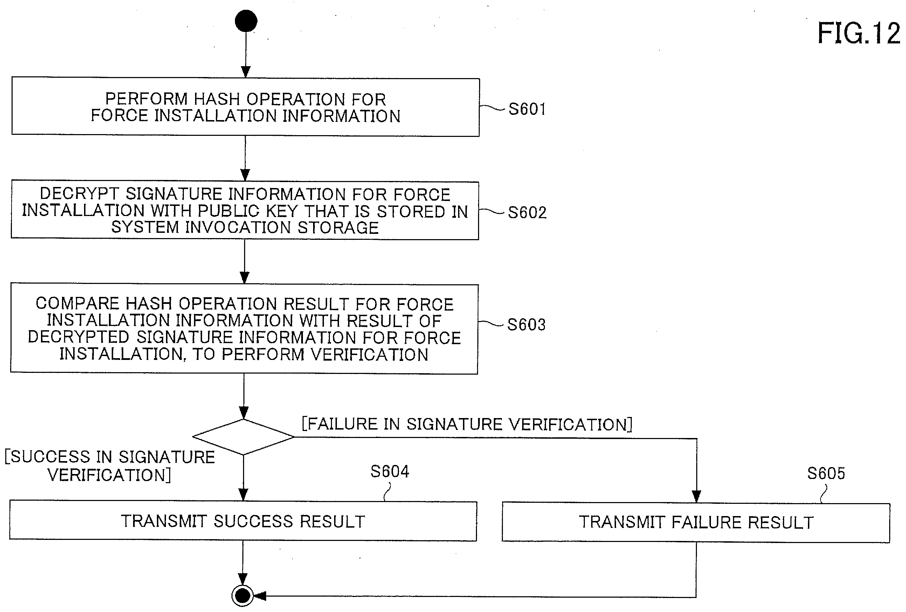

The force installation information 18 and the signature information 19 for force installation are retrieved from the external memory 3 (S501). Then, signature verification is performed using the signature verification application 13 (S502). A signature verification process by the signature verification application 13 will be described below in detail with reference to Fig. 12.

When a signature verification result transmitted from the signature verification application 13 indicates a success, the force installation information 18 is stored in the system invocation storage 4 and then the system is updated (S503). Further, a signature (signature information 20 for force installation), which is to be used when the system is normally launched and is for performing the signature verification for the force installation information 18, is generated using the signature generation function provided by the Linux-IMA 11B. The generated signature is stored in a metadata area of the force installation information 18 that is stored in the system invocation storage 4 (S504).

When a signature verification result transmitted from the signature verification application 13 indicates a failure, the system is stopped (S505).

Fig. 12 is a diagram illustrating an example of activity of the signature verification application 13 used when installation is forcibly performed.

The signature verification application 13 causes the hash operation for the force installation information 18 to be performed (S601).

The signature information 19 for force installation is decoded with the public key 16 for signature verification that is stored in the system invocation storage 4 (S602).

A hash calculation result for the force installation information 18 is compared with a result of the decoded signature information 19 for force installation, to perform verification (S603).

As a compared result for the verification, when the signature verification is successfully performed, a success result is transmitted to the system update application 12 (S604). When the signature verification fails, a failure result is transmitted to the system update application 12 (S605).

Note that the configuration of the information processing apparatus 1 according to the present embodiment is not limited to the configuration illustrated in Fig. 1, when the information processing apparatus 1 includes the function of verifying legitimacy of a given file to be used when the system is updated, or in other cases. For example, the information processing apparatus 1 includes a projector (PJ), an interactive whiteboard (IWB, an electronic whiteboard capable of performing mutual communication), an output device such as digital signage, a head-up display (HUD), industrial machinery, or an imaging device. The information processing apparatus 1 also includes a sound collector, a medical device, a network home appliance, a vehicle (connected car), a notebook-size personal computer (PC), a cellular phone, a smartphone, a tablet terminal, a game device, a personal digital assistant (PDA), a digital camera, a wearable computer, or a desktop computer.

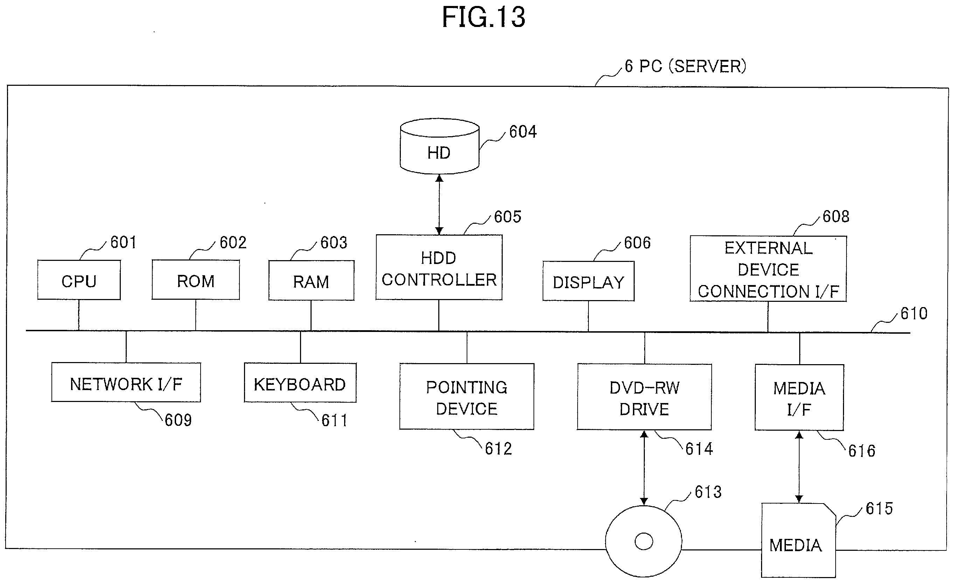

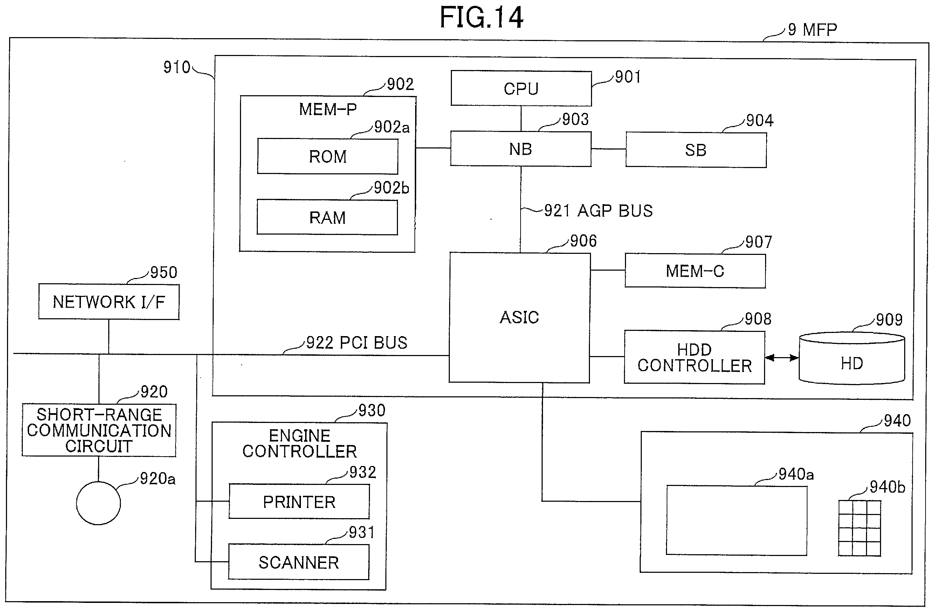

For example, the information processing apparatus 1 according to the embodiment may include a personal computer (server 6) or an MFP (Multifunction Peripheral/product/printer) 7. Where, the personal computer (server 6) has the hardware configuration as illustrated in Fig. 13, and the MFP 7 has the hardware configuration as illustrated in Fig. 14.

Fig. 13 is a diagram illustrating an example of a hardware configuration of the personal computer (server 6). In the following, the hardware configuration of the server 6 will be described.

As illustrated in Fig. 13, the server 6 is a computer and includes a CPU 601, a ROM 602, a RAM 603, a hard disk (HD) 604, a hard disk drive (HDD) controller 605, a display 606, and an external device connection interface (I/F) 608. The server 6 also includes a network I/F 609, a data bus 610, a keyboard 611, a pointing device 612, a digital versatile disk rewritable (DVD-RW) drive 614, and a media I/F 616.

The CPU 601 controls the operation of the entire server 6. The ROM 602 stores a program such as an initial program loader (IPL), which is used to drive the CPU 601. The RAM 603 is used as a work area of the CPU 601. The HD 604 stores various data and programs. The HDD controller 605 controls the reading and writing of various data with respect to the HD 604, under a control of the CPU 601. The display 606 displays various information such as a cursor, menus, windows, characters, and images. The external device connection I/F 608 is an interface for connecting various external devices. In this case, the external device includes a universal serial bus (USB) memory, a printer, or the like, for example. The network I/F 609 is an interface for performing data communication through a communication network. The bus line 610 includes an address bus, a data bus, or the like, which is for electrically connecting components such as the CPU 601 illustrated in Fig. 13.

The keyboard 611 is an input device with multiple keys for inputting characters, numbers, various indications, and the like. The pointing device 612 is an input device for selecting and executing of various instructions, selecting a process target, moving a cursor, and the like. The DVD-RW drive 614 controls the reading and writing of various data with respect to the DVD-RW 613, which is an example of a removable recording medium. Note that the removable recording medium is not limited to the DVD-RW, and may include a DVD-R or the like. The media I/F 616 controls the reading and writing (storing) of data with respect to a recording media 615 such as a flash memory.

Fig. 14 is a diagram illustrating an example of a hardware configuration of the MFP 9. As illustrated in Fig. 14, the MFP (Multifunction Peripheral/Product/Printer) 9 includes a controller 910, a short-range communication circuit 920, an engine controller 930, an operational panel 940, and a network interface (I/F) 950.

The controller 910 includes a CPU 901 as a main unit of a computer, a system memory (MEM-P) 902, a north bridge (NB) 903, a south bridge (SB) 904, and an application specific integrated circuit (ASIC) 906. The controller 910 also includes a local memory (MEM-C) 907 as a storage, a hard disk drive (HDD) controller 908, and a HD 909 as a storage. An accelerated graphics port (AGP) bus 921 is connected between the NB 903 and the ASIC 906.

The CPU 901 is a controller that performs the entire control of the MFP 9. The NB 903 is a bridge for connecting the CPU 901, the MEM-P 902, the SB 904, and the AGP bus 921. The NB 903 includes a memory controller that controls the reading, writing, and the like with respect to the MEM-P 902. The NB 903 also includes a peripheral component interconnect (PCI) master and an AGP target.

The MEM-P 902 includes a ROM 902a, which is a memory for storing one or more programs and data for implementing functions of the controller 910, and includes a RAM 902b, which is used as a memory for expanding one or more programs and data, for rendering in printing, and the like. Note that in order to provide one or more programs stored in the RAM 902b, the programs may be recorded onto a computer-readable recording medium in an installable format file or an executable format file. The computer-readable recording medium includes a CD (compact disk)-ROM, a CD-R (recordable), a digital versatile disk (DVD), or the like.

The SB 904 is a bridge for connecting the NB 903 to each of a PCI device and a peripheral device. The ASIC 906 is an integrated circuit (IC) for image processing, which includes hardware elements for image processing. The ASIC 906 serves as a bridge that is connected to each of the AGP bus 921, the PCl bus 922, the HDD 908, and the MEM-C 907. The ASIC 906 includes a PCl target, an AGP master, an arbitrator (ARB) that forms the core of the ASIC 906, and a memory controller that controls the MEM-C 907. The ASIC 906 also includes a plurality of direct memory access controllers (DMACs) each of which performs processing such as rotation processing of image data by a hardware logic or the like. The ASIC 906 further includes a PCl unit that performs data transfer between a scanner 931 and a printer 932, and data is transferred via the PCI bus 922. Note that a universal serial bus (USB) interface or an IEEE 1394 (Institute of Electronic and Electronic Engineers 1394) interface may be connected to the ASIC 906.

The MEM-C 907 is a local memory used as an image buffer for copying and a code buffer. The HD 909 is a storage that stores image data, font data used in printing, and applicable foams. The HD 909 controls the reading and writing of data with respect to the HD 909, under a control of the CPU 901. An AGP bus 921 is a bus interface for graphics accelerator cards, which is proposed to accelerate graphics processing. The AGP bus 921 directly accesses the MEM-P 902 with high throughput to allow high speed processing for the graphics accelerator card.

The short-range communication circuit 920 is provided with a short-distance communication circuit 920a. The short-range communication circuit 920 is a communication circuit such as near field communication (NFC), Bluetooth (registered trademark), or the like.

The engine controller 930 includes the scanner 931 and the printer 932. The operational panel 940 includes a panel display 940a and an operational panel 940b. The panel display 940a includes a touch panel or the like, which displays a present setting value, a selection screen, or the like and receives input from an operator. The operational panel 940b includes a numeric keypad, a start key, and the like. The numeric keypad is used to input a setting value as a condition about image formation, where the condition includes a condition for setting an image density, and the like. The controller 910 controls the entire MFP 9 and controls, for example, the rendering, communication, input through the operational panel 940, and the like. Each of the scanner 931 and the printer 932 performs image processing relating to error diffusion, gamma conversion, and the like.

Note that for the MFP 9, a document filing function, a copy function, a print function, and a facsimile function are sequentially switched through an application switching key included in the operational panel 940, and a target function can be selected accordingly. When the document filing function is selected, the MFP 9 is in a document filing mode. When the copy function is selected, the MFP 9 is in a copy mode. When the print function is selected, the MFP 9 is in a print mode. When the facsimile mode is selected, the MFP 9 is in a facsimile mode.

The network I/F 950 is an interface for performing data communication through a communication network. The short-range communication circuit 920 and the network I/F 950 are each electrically connected to the ASIC 906 via the PCl bus 922.

As described above, the embodiments have been described using the specific examples. However, the present disclosure is not limited to the specific examples. Modifications to the embodiments appropriately made by those skilled in the art can cover a scope of the present disclosure, as long as the modifications have the features of the present disclosure. The elements, arrangement, conditions, shape, and the like of each element, which are described in the specific examples, are not limited to the above examples, and can be varied as appropriate. For the elements described in the above specific examples, a combination of given elements can be varied as appropriate unless there is a technical inconsistency.

## Claims

1. An information processing apparatus comprising:
first means for performing signature verification based on a value and a signature file to ensure integrity and authenticity of an update file to be used when a system is updated, the value being uniquely calculated based on the update file, and the signature file corresponding to the update file; and
second means for ensuring the integrity and authenticity of an invocation file to be executed at startup of the system,
wherein after the first means causes the system to be updated using the update file for which the integrity and authenticity are ensured, the second means causes the system to be launched using the invocation file for which the integrity and authenticity are ensured, to ensure the integrity and authenticity of files that are used when the system is updated and at startup of the system.

2. The information processing apparatus according to claim 1, wherein the update file and the signature file are downloaded from a network server.

3. The information processing apparatus according to claim 1 or 2, further comprising third means for, when the system is updated using a force installation file for rewriting the entire system, performing signature verification based on a second value and a second signature file, the second value being uniquely calculated based on the force installation file, the second signature file corresponding to the force installation file; and
for ensuring, when installation is forcibly performed, the integrity and authenticity of the force installation file.

4. The information processing apparatus according to any one of claims 1 to 3, wherein the uniquely calculated value is based on a result of a hash operation.

5. A method for ensuring files for an information processing apparatus, the method comprising:
performing signature verification based on a value and a signature file to ensure integrity and authenticity of an update file to be used when a system is updated, the value being uniquely calculated based on the update file, the signature file corresponding to the update file; and
after the system is updated using the update file for which the integrity and authenticity are ensured, invoking the system to ensure the integrity and authenticity of an invocation file that is executed at startup of the system.

6. A non-transitory storage medium storing a program that, when executed by a computer, causes the computer to execute a method, the method comprising:
performing signature verification based on a value and a signature file to ensure integrity and authenticity of an update file to be used when a system is updated, and the value being uniquely calculated based on the update file, the signature file corresponding to the update file; and
after the system is updated using the update file for which the integrity and authenticity are ensured, ensuring the integrity and authenticity of an execution file that is executed at startup of the system.
